Europäisches Patentamt

European Patent Office

Office européen des brevets

(11) Veröffentlichungsnummer: **0 224 862 B1**

(12) **EUROPÄISCHE PATENTSCHRIFT**

(45) Veröffentlichungstag der Patentschrift: **24.04.91**

(21) Anmeldenummer: **86116413.5**

(22) Anmeldetag: **26.11.86**

(51) Int. Cl.⁵: **B65D 65/40**, B32B 27/08,
B32B 27/30

(54) Siegelbare Mehrschichtfolien.

(30) Priorität: **06.12.85 DE 3543118**

(43) Veröffentlichungstag der Anmeldung:
**10.06.87 Patentblatt 87/24**

(45) Bekanntmachung des Hinweises auf die
Patenterteilung:
**24.04.91 Patentblatt 91/17**

(84) Benannte Vertragsstaaten:
**AT BE CH DE ES FR GB IT LI NL SE**

(56) Entgegenhaltungen:
**EP-A- 0 001 898**
**FR-A- 2 355 655**
**US-A- 4 629 657**

(73) Patentinhaber: **Wolff Walsrode Aktiengesellschaft
Postfach
W-3030 Walsrode 1(DE)**

(72) Erfinder: **Schinkel, Ingo
Witternstrasse 14
W-3030 Walsrode(DE)**
Erfinder: **Wagner, Helmut
An der Warnau 4
W-3036 Bomlitz(DE)**

(74) Vertreter: **Zobel, Manfred, Dr. et al
c/o BAYER AG Konzernverwaltung RP Patentabteilung Bayerwerk
W-5090 Leverkusen(DE)**

## Beschreibung

Die vorliegende Erfindung betrifft Mehrschichtfolien. die sich insbesondere als Verpackungsfolien eignen, da sie eine ausreichende Siegelfestigkeit bei relativ niedrigen Siegeltemperaturen aufweisen.

Es ist bekannt, daß Mehrschichtfolien auf Basis einer Polypropylenfolie und Siegelschichten aus Polymeren wie Ionomerharzen (z.B. Surlyn®) bei relativ niedrigen Temperaturen mit einer ausreichenden Festigkeit siegeln. Dies gilt auch für Mehrschichtfolien, die Siegelschichten aus Ethylen/Vinylacetat-Copolymerisaten aufweisen.

Beide bekannten Mehrschichtfolien haben aber den Nachteil, daß sie nach einer für das Bedrucken von Folien notwendigen elektrischen Vorbehandlung nicht mehr mit ausreichender Festigkeit siegeln. Selbst wenn nur eine Siegelschicht einer beidseitig siegelbaren Mehrschichtfolie elektrisch vorbehandelt wird, so kann die so vorbehandelte Mehrschichtfolie für eine Vielzahl von Einschlagverpackungen nicht mehr verwendet werden; nämlich bei den Verpackungen nicht, bei denen eine Versiegelung einer vorbehandelten gegen eine vorbehandelte oder nicht vorbehandelte Folienoberfläche erfolgen muß.

Überraschenderweise gelang es nun durch Bereitstellen der erfindungsgemäßen Mehrschichtfolien mit asymmetrischem Aufbau, diese Nachteile zu beheben und problemlos bedruckbare und siegelbare Mehrschichtfolien zur Verfügung zu stellen.

Die vorliegende Erfindung betrifft daher heiß siegelbare, zumindest monoaxial orientierte, gegebenenfalls bedruckbare Mehrschichtfolien mit asymmetrischem Aufbau aus einer Folie aus einem Propylenpolymeren als Basisschicht und zwei außenliegenden Siegelschichten, von denen die eine Siegelschicht (1) ein Ionomerharz oder ein Ethylen/ Vinylacetatcopolymer enthält, bzw. daraus besteht, wobei die Siegelschicht (1) gegebenenfalls Acrylsäurederivate enthält, und die andere Siegelschicht (2) ein Copolymerisat aus Ethylen/Acrylsäure und gegebenenfalls Acrylsäurederivaten enthält, bzw. daraus besteht, wobei diese Siegelschicht gegebenenfalls bedruckbar ist.

Unter einem asymmetrischen Aufbau wird verstanden, daß die chemische Zusammensetzung der zwei außenliegenden Siegelschichten unterschiedlich ist. Aufgrund dieses asymmetrischen Aufbaus ergeben diese erfindungsgemäßen Mehrschichtfolien auch dann Siegelnähte mit ausreichender Siegelfestigkeit bei relativ niedrigen Temperaturen, wenn sie auf einer ihrer Oberflächen bedruckt sind.

Die Basisschicht der erfindungsgemäßen siegelbaren Mehrschichtfolien besteht im wesentlichen aus einem Propylenpolymeren, das bis zu höchstens 10 Gew.-% eines weiteren $\alpha$-Olefins mit höchstens 8 Kohlenstoffatomen, vorzugsweise Ethylen, enthält.

Bevorzugt wird ein isotaktisches Polypropylen mit einer Dichte von 0,9-0,91 g/cm$^3$ und einem Schmelzindex von 1-4 g/10 min bei 230° C/21,6 N (nach DIN 53735) eingesetzt. Die Basisschicht kann 3 - 15 Gew.-%, vorzugsweise 8 - 12 Gew.-% eines mit dem Propylenpolymeren unverträglichen Additivs, vorzugsweise ein anorganisches Additiv, wie Calciumcarbonat, Siliciumdioxid, Natriumaluminiumsilikat und/oder Titandioxid enthalten, wodurch eine Opalisierung der Folie erreicht wird.

Als Ionomerharze zur Herstellung der Siegelschicht (1) können die bekannten Copolymerisate aus $\alpha$-Olefinen, $\alpha,\beta$-ungesättigten Monocarbonsäuren und gegebenenfalls Derivaten dieser $\alpha,\beta$-ungesättigen Monocarbonsäuren, vorzugsweise Anhydride, Amide oder Ester niederer aliphatischer Alkohole eingesetzt werden, wobei die Carboxylgruppen zumindest zu 10 Mol-% mit Metallionen neutralisiert sind. Zur Salzbildung eignen sich insbesondere ein-, zwei- und dreiwertige Ionen von Metallen der Gruppe I bis III, IVa und VIII des Periodensystems der Elemente (vergleiche "Handbook of Chemistry and Physics", Chemical Rubber Publishing Co., 37. Auflage, Seite 392).

Geeignete einwertige Metallionen sind Natrium, Kalium, Lithium, Cäsium, Silber, Quecksilber und Kupfer, Geeignete zweiwertige Metallionen sind Beryllium, Magnesium, Calcium, Strontium, Barium, Kupfer, Cadmium, Quecksilber, Zinn, Blei, Eisen, Kobald, Nickel und Zink. Geeignete dreiwertige Metallionen sind Aluminium und Eisen. Vorzugsweise werden zur Neutralisation Zinkionen und/oder Natriumionen verwendet. Das Ionomerharz sollte zumindest zu 50 Mol-% aus einem $\alpha$-Olefin, vorzugsweise Ethylen, bestehen, Bevorzugte Ionomerharze enthalten 1 bis 25 Mol-% der $\alpha,\beta$-ungesättigten Monocarbonsäure, wobei mindestens 10 %, vorzugsweise 30 % der Carboxylgruppen durch Metallionen neutralisiert sind. Besonders geeignet zur Herstellung der erfindungsgemäßen Mehrschichtfolien sind Copolymerisate aus mehr als 80 Mol-% Ethylen und weniger als 20 Mol-% Acrylsäure und gegebenenfalls Acrylsäure-Derivaten, die zu mindestens 10 %, vorzugsweise mindestens 30 %, mit Zinkionen neutralisiert sind (Surlyn 1705®).

Als Siegelschichtmaterial für die Siegelschicht (1) können auch Ethylen-Vinylacetat-Copolymerisate verwendet werden, deren Vinylacetatgehalt 2-10 Gew.-%, vorzugsweise 6-9 Gew.-% beträgt und deren Schmelzindex im Bereich von 0,5-3 g/10 min bei 190° C/ 21,6 N (DIN 53735), vorzugsweise im Bereich von 1-2 g/ 10 min liegt.

Zur Herstellung der Siegelschicht (2), die auch elektrisch vorbehandelt werden kann ohne daß sie ihre Siegelfähigkeit verliert, werden Copolymerisate aus Ethylen/Acrylsäure und gegebenenfalls Acrylsäurederivaten, wie Acrylnitril oder Acrylsäureester niederer aliphatischer Alkohle ($C_1$-$C_4$), verwendet. Bei den Copolymerisaten dieser Siegelschicht handelt es sich nicht bzw. im wesentlichen nicht um Ionomerharze. Die Carboxylgruppen sind also nicht bzw. in wesentlichen nicht neutralisiert.

Die Copolymerisate enthalten vorzugsweise 1-20 Gew.-% Acrylsäure und gegebenenfalls Acrylsäurederivate, insbesondere 3-10 Gew.-% Acrylsäure und gegebenenfalls Acrylsäurederivate. Besonders bevorzugt werden Copolymerisate mit 6-9 Gew.-% Acrylsäure eingesetzt. Der Schmelzindex der Siegelschichtmaterialien sollte im Bereich von 1-20, vorzugsweise 3-15, besonders bevorzugt 5-10 g/10 min bei 190°C/21,6 N, gemessen nach DIN 53735, liegen.

Die erfindungsgemäßen Mehrschichtfolien können außer der Basisschicht und den äußeren Siegelschichten noch weitere Schichten wie eine Gassperrschicht und gegebenenfalls Haftvermittlerschichten enthalten. Zur Herstellung der Gassperrschicht können die bekannten Polymerisate verwendet werden, vorzugsweise Ethylen/Vinylacetat-Copolymerisate, die aus 40 bis 85 Mol-%, vorzugsweise aus 60 bis 75 Mol-% Vinylacetateinheiten bestehen, die zu mindestens zu 90 %, vorzugsweise zu mehr als 95 Mol-% verseift sind. Die Grenzviskositätszahlen [$\eta$] der Polymeren, gemessen in einem Lösungsmittel-Gemisch aus 85 Gew.-% Toluol und 15 Gew.-% Wasser, sollten vorzugsweise zwischen 0,07 und 0,17 1/g, besonders bevorzugt zwischen 0,09 und 0,15 1/g liegen.

Zur Herstellung der Gassperrschicht, insbesondere einer Sauerstoff- und/oder Aromabarriereschicht können nicht nur die angegebenen Ethylen/Vinylalkohol-Copolymere verwendet werden, sondern noch weitere Polymere mit Gassperreigenschaften, wie z.B. Polyvinylalkohol oder Polyamide. Besonders geeignet sind Mischungen von Ethylen/Vinylalkohol-Copolymeren, wie sie zuvor beschrieben wurden, und 10-60 Gew.-% der genannten Polymeren. Als Polyamide eignen sich insbesondere Polyamid-6, -12.

Geeignete Mischungen sind auch solche Mischungen, die in der EP 00 64 330 A 1 und EP 00 63 006 A 1 beschrieben werden, wo zur Herstellung der Gassperrschichten Mischungen aus Ethylen/Vinylalkohol-Copolymeren und Polyamiden verwendet werden, die zusätzlich geeignete Weichmacher enthalten.

Weisen die erfindungsgemäßen Mehrschichtfolien Gassperrschichten auf, so wird in aller Regel eine ausreichende Verbundhaftung nur durch Mitwirkung von Haftvermittlerschichten erreicht. Zur Herstellung solcher Haftvermittlerschichten werden vorzugsweise modifizierte Polyolefine eingesetzt. Das sind insbesondere Homo- oder Copolyolefine mit Carboxylgruppen wie z.B. Polypropylen oder Polyethylen, die mindestens ein Monomer aus der Gruppe der $\alpha,\beta$-einfach ungesättigten Dicarbonsäuren, wie z.B. Maleinsäure, Fumarsäure, Itaconsäure oder deren Säureanhydride, Säureester, Säureamide oder Säureimide aufgepfropft enthalten. Weiterhin sind geeignet Copolymerisate von Ethylen mit $\alpha,\beta$-ungesättigten Carbonsäuren wie Acrylsäure, Methacrylsäure und/oder deren Metallsalze (Zink, Natrium) und/oder deren Alkyl-($C_1$-$C_4$)-estern oder entsprechende Pfropfpolymere der genannten Monomere auf Polyolefine wie Polyethylen oder Polypropylen oder partiell verseifte Ethylen/Vinylacetat-Mischpolymerisate, die gegebenenfalls mit einem Monomer der oben genannten Säuren pfropfpolymerisiert sind und einen niedrigen Verseifungsgrad aufweisen oder deren Mischungen,

Besonders bevorzugt werden zur Herstellung von Haftvermittlerschichten Polyolefine wie Polypropylen oder Copolymerisate von Propylen und Ethylen mit maximal 1 Gew.-% aufgepfropften $\alpha,\beta$-einfach ungesättigten Dicarbonsäureanhydriden, wie Maleinsäureanhydrid oder deren verseiften Mischpolymerisate, gegebenenfalls abgemischt mit Polyolefinen, verwendet.

Das Haftvermittlerpolymere kann auch in die siegelbare Schicht oder in die Gassperrschicht eingearbeitet werden. Eine Ausrüstung der Schichten der erfindungsgemäßen Mehrschichtfolien mit üblichen Additiven und Hilfsmitteln wie z.B. Gleitmitteln, Antiblockmitteln und Antistatika in üblichen Mengen ist möglich.

So können Polydiorganosiloxane oder deren Mischungen, die bei 25°C eine kinematische Viskosität von mindestens 100 mm²/sec aufweisen, eingesetzt werden. Geeignete Polydiorganosiloxane sind Polydialkylsiloxane, Polyalkylvinylsiloxane, Olefin-modifizierte Siloxanöle, Polyether-modifizierte Siloxanöle und Olefin/Polyether-modifizierte Silikonöle, Ethoxy-modifizierte Silikonöle und Alkohol-modifizierte Silikonöle, Polydialkylsiloxane mit vorzugsweise 1-4C-Atomen in der Alkylgruppe.

Polydimethylsiloxan ist besonders geeignet, Vorzugsweise sollten die Polydiorganosiloxane eine kinematische Viskosität von wenigstens $10^5$ mm²/sec bei 25°C, insbesondere bevorzugt von wenigstens $10^6$ mm²/sec aufweisen, Weiterhin können die bekannten ungesättigten Fettsäureamide, gesättigten Fettsäureamide, wie z.B. Stearinsäureamid, Erucasäureamid, außerdem die mit den Polymeren der Schichtmaterialien unverträglichen thermoplastischen Polymeren, wie z.B. Polyamid-12 oder anorganische Abstandshalter wie $SiO_2$, $CaCO_3$ und/oder antistatische Verbindungen wie langkettige, aliphatische, tertiäre Amine, die gegebenenfalls einfach ungesättigt sein können, wie ethoxylierte tertiäre Amine, besonders bevorzugt N,N-bis-(hydroxyethyl)-($C_{12}$-$C_{16}$)-alkylamid zur Ausrüstung der Schichten eingesetzt werden.

Die erfindungsgemäßen Mehrschichtfolien können nach üblichem Verfahren wie Laminierung, Beschichtung und/oder Schmelz-(Co)-Extrusion hergestellt werden.

Die erfindungsgemäßen Mehrschichtfolien sind zumindest monoaxial orientiert; vorzugsweise werden sie einer biaxialen Reckung unterworfen. Dabei wird die Längsreckung vorzugsweise im Verhältnis 5:1 bis 7:1 und die Querreckung im Verhältnis 7:1 bis 10:1 vorgenommen.

Die erfindungsgemäßen Mehrschichtfolien weisen vorzugsweise eine Gesamtdicke von 10-100 μm, besonders bevorzugt von 20-50 μm auf, wobei die Basisschicht eine Dicke von 20-50 μm und die heißsiegelbaren Schichten vorzugsweise eine Dicke von 0,8-2 μm, besonders bevorzugt von 1,2-1,5 μm aufweisen sollen.

Die erfindungsgemäßen Mehrschichtfolien eignen sich besonders als Verpackungsmaterial, insbesondere als Einschlagfolien, vorzugsweise für Lebensmittel, und können zu diesem Zweck bedruckt und mit Aufreißstreifen versehen werden.

In den nachfolgenden Beispielen wurden folgende Prüfmethoden zur Bestimmung der Werte verwendet: Die Trübung wurde nach ASTM D 1003 - 52 bestimmt. Zur Bestimmung des Glanzes der Folie wurde ein fotoelektrischer Glanzmesser nach Dr. B. Lange, Berlin, bestehend aus einer Niedervolt-Glühlampe und einem Kondensor, der unter 45° die Probe beleuchtet und einem zweiten unter 45° zur Meßebene stehenden Schenkel mit Lochblende und Fotozelle benutzt. Angeschlossen ist ein feinregulierbares Anzeigegerät (Mikroamperemeter), das außerdem die Stromversorgung und den Spannungskonstanthalter für die Glühlampe enthält. Der Glanz ist definiert als der unter 45° regulär reflektierte Lichtanteil in Prozenten, bezogen auf einen oberflächenversilberten Spiegel als 100-iger Standard. Bei der Prüfung des Glanzes wird auf den Glanzmesser eine polierte schwarze Glasplatte als Zwischenstandard gesetzt, weil der Silberspiegel-Standard nicht beständig im Anlaufen durch Luftverunreinigung ist. Dieser weist genau 5 % des Glanzes einer oberflächenversilberten Spiegelglasplatte auf.

Die Galvanometeranzeige der Fotozelle des Glanzmessers wird über den Schwarzglas-Zwischenstandard zwecks Erhöhung der Ablesegenauigkeit der Skaleneinteilung mit dem Regelpotentiometer eingestellt. Die zu prüfende Folie wird quer zur Laufrichtung, bezogen auf die optische Achse des Glanzmessers, über mattschwarzem Fotopapier plan unter den Glanzmesser gelegt und an fünf einwandfreien Stellen gemessen. Man teilt die Galvanometeranzeige durch 10 und ermittelt den Mittelwert.

Zur Bestimmung der Festigkeit von Siegelnähten wird die Siegelfestigkeit bei einem Siegeldruck von 50 N/cm² geprüft. Dabei wird unter Siegelfestigkeit die Kraft verstanden, die erforderlich ist, um eine unter definierten Bedingungen (50 N/cm² Druck und einer Siegeldauer von 0,5 sec) unter den in der Tabelle 1 angegebenen Temperaturen hergestellte Siegelnaht zu trennen. Die Siegelfestigkeit wird in N angegeben und auf einen 15 mm breiten Prüfstreifen bezogen.

Zur Bestimmung der Kratzfestigkeit wird die unter Verwendung der Ulbrichtschen Kugel bestimmte Trübung festgestellt. Dabei wird die Trübung einer Folie vor und nach dem Verkratzen gemessen. Das Verkratzen erfolgt mit Hilfe von 40 g staubfreiem Siliciumkarbid, das innerhalb einer definierten Zeit auf eine um 45° gegen die horizontal geneigte Folie gestreut wird.

Beispiel 1

Nach üblichem Verfahren werden auf eine Basisfolie aus Polypropylen der Dichte 0,905 g/cm³, dem Schmelzindex von 3,3 g/10 min bei 230°C/21,6 N und dem Schmelzbereich von 160-166°C auf eine Oberfläche (A) eine Siegelschicht aus einem Ethylen/Acrylsäure-Copolymerisat, dessen Carboxylgruppen mit Zinkionen neutralisiert sind, und auf der anderen Oberfläche (B) ein Ethylen/Acrylsäure-Copolymerisat mit 3 Mol-% Acrylsäure aufgebracht und der Verbund verstreckt, so daß eine Verbundfolie mit einer Längsreckung im Verhältnis 5:1 und einer Querreckung im Verhältnis 10:1 erhalten wird.

Dabei haben die Basisfolien eine Dicke von 17,4 μm und die Siegelschichten jeweils eine Dicke von 1,3 μm.

Vor Bestimmung der Siegelfestigkeit, des Glanzes und der Kratzfestigkeit wird die Siegelschicht, die aus dem Ethylen/Acrylsäure-Copolymerisat besteht, elektrisch vorbehandelt (Coronabehandlung). Die Meßergebnisse sind in Tabelle 1 eingetragen.

Beispiel 2 (Vergleich)

Wie in Beispiel 1 angegeben, wird eine Mehrschichtfolie hergestellt, wobei aber beide Oberflächen der Basisfolie aus Polypropylen mit einem Ethylen/Acrylsäure-Copolymerisat versehen werden, dessen Carboxylgruppen mit Zinkionen neutralisiert sind. Entsprechend Beispiel 1 wird wieder eine Siegelschicht elek-

4

trisch vorbehandelt. Die Meßergebnisse sind in Tabelle 1 eingetragen.

## Tabelle 1

### Beispiel 1                                          ### Vergleichsbeispiel 2

| | Beispiel 1 | | | Vergleichsbeispiel 2 | | |
|---|---|---|---|---|---|---|
| Oberfläche: | A | B | | A | B | |
| Glanz | 87 | 86 | | 87 | 87 | |
| Trübung (%) der Gesamtfolie | 2,8 | | | 2,6 | | |
| Kratzfestigkeit | 1,5/27,5 | 1,6/33,3 | | 1,5/27,5 | 1,5/27,5 | |
| Siegelfestigkeit | A | A | B | A | A | B |
| (N/15 min) | gegen B | gegen A | gegen B | gegen B | gegen A | gegen B |
| bei Temperaturen | | | | | | |
| 90° C | 0,3 | 0,8 | 0,2 | 0 | 0,8 | 0 |
| 95° C | 1,0 | 1,0 | 0,7 | 0 | 1,0 | 0 |
| 100° C | 1,0 | 1,2 | 1,0 | 0 | 1,2 | 0 |
| 110° C | 1,1 | 1,3 | 1,1 | 0,1 | 1,3 | 0 |
| 120° C | 1,2 | 1,3 | 1,1 | 0,3 | 1,3 | 0,1 |

Oberfläche A: Ethylen/Acrylsäure-Copolymerisat, dessen Carboxylgruppen mit Zinkionen neutralisiert sind.

Oberfläche B: Ethylen/Acrylsäure-Copolymerisat mit 3 Mol-% Acrylsäure.

Diese Oberfläche ist elektrisch vorbehandelt.

Ethylen/Acrylsäure-Copolymerisat, dessen Carboxylgruppen mit Zinkionen neutralisiert sind.

Ethylen/Acrylsäure-Copolymerisat, dessen Carboxylgruppen mit Zinkionen neutralisiert sind. Diese Oberfläche ist elektrisch vorbehandelt.

EP 0 224 862 B1

## Ansprüche

1. Heiß-siegelbare, zumindest monoaxial orientierte, gegebenenfalls bedruckbare Mehrschichtfolien mit asymmetrischem Aufbau aus einer Folie aus einem Propylenpolymeren als Basisschicht und zwei außenliegenden Siegelschichten, von denen

   1) die eine Siegelschicht (1) ein Ionomerharz oder ein Ethylen/Vinylacetat-Copolymer enthält, bzw. daraus besteht, und gegebenenfalls Acrylsäurederivate enthält und

   2) die andere Siegelschicht (2) ein Copolymerisat aus Ethylen/ Acrylsäure und gegebenenfalls Acrylsäurederivaten enthält.

2. Mehrschichtfolien nach Anspruch 1, dadurch gekennzeichnet, daß die Siegelschicht (2) bedruckbar ist.

3. Mehrschichtfolie nach wenigstens einem der vorhergehenden Ansprüche, dadurch gekennzeichnet, daß die Basisschicht im wesentlichen aus einem Propylenpolymeren besteht, das bis zu höchstens 10 Gew.-% eines weiteren α-Olefins mit höchstens 8 Kohlenstoffatomen enthält.

4. Mehrschichtfolie nach wenigstens einem der vorhergehenden Ansprüche, dadurch gekennzeichnet, daß sie eine Siegelschicht (1) aus einem Ethylen/Acrylsäure-Copolymerisat, dessen Carboxylgruppen zumindest teilweise mit Zn-Ionen neutralisiert sind, und eine Siegelschicht (2) aus einem Ethylen/Acrylsäure-Copolymerisat aufweist.

5. Mehrschichtfolie nach wenigstens einem der vorhergehenden Ansprüche, dadurch gekennzeichnet, daß weitere Schichten enthalten sind.

6. Mehrschichtfolie nach wenigstens einem der vorhergehenden Ansprüche, dadurch gekennzeichnet, daß sie biaxial gereckt ist.

7. Verfahren zum Einschlagen von Lebensmitteln mit einer Folie, dadurch gekennzeichnet, daß wenigstens eine Folie gemäß wenigstens einem der vorhergehenden Ansprüche verwendet wird.

## Claims

1. Heat-sealable, at least monoaxially oriented multi-layer films which can, if desired, be printed and have an asymmetric structure, composed of a film consisting of a propylene polymer as the base layer and two outer sealing layers of which

   1) one sealing layer (1) contains an ionomer resin or an ethylene/vinyl acetate copolymer, or consists thereof, and, if appropriate, contains acrylic acid derivatives, and

   2) the other sealing layer (2) contains a copolymer formed from ethylene/acrylic acid and, if appropriate, acrylic acid derivatives.

2. Multi-layer films according to Claim 1, characterized in that the sealing layer (2) can be printed.

3. Multi-layer film according to at least one of the preceding claims, characterized in that the base layer consists essentially of a propylene polymer containing up to not more than 10% by weight of a further α-olefin having not more than 8 carbon atoms.

4. Multi-layer film according to at least one of the preceding claims, characterized in that it has a sealing layer (1) composed of an ethylene/acrylic acid copolymer in which the carboxyl groups have been at least partially neutralized with Zn ions, and a sealing layer (2) composed of an ethylene/acrylic acid copolymer.

5. Multi-layer film according to at least one of the preceding claims, characterized in that further layers are contained.

6. Multi-layer film according to at least one of the preceding claims, characterized in that it is biaxially stretched.

7. Process for wrapping foodstuffs with a film, characterized in that at least one film according to at least one of the preceding claims is used.

**Revendications**

1. Feuilles multicouches à orientation au moins monoaxiale, soudables à chaud, pouvant éventuellement recevoir une impression, présentant une structure asymétrique constituée d'une feuille en un polymère de propylène comme couche de base et de deux couches externes pouvant être soudées, dont
   1) la couche (1) pouvant être soudée contient une résine ionomère ou un copolymère éthylène/acétate de vinyle (1) ou est constituée par cette résine ou ce copolymère et contient le cas échéant des dérivés d'acide acrylique et
   2) l'autre couche (2) pouvant être soudée contient un copolymérisat d'éthylène/acide acrylique et le cas échéant de dérivés d'acide acrylique.

2. Feuilles multicouches suivant la revendication 1, caractérisées en ce que la couche soudable (2) peut être imprimée.

3. Feuille multicouche suivant au moins l'une des revendications précédentes, caractérisée en ce que la couche de base est essentiellement constituée d'un polymère de propylène qui contient au maximum 10% en poids d'une autre α-oléfine ayant au maximum 8 atomes de carbone.

4. Feuille multicouche suivant au moins l'une des revendications précédentes, caractérisée en ce qu'elle présente une couche soudable (1) en un copolymérisat éthylène/acide acrylique dont les groupes carboxyle sont au moins partiellement neutralisés avec des ions Zn, et une couche soudable (2) en un copolymérisat éthylène/acide acide acrylique.

5. Feuille multicouche suivant au moins l'une des revendications précédentes, caractérisée en ce qu'elle contient d'autres couches.

6. Feuille multicouche suivant au moins l'une des revendications précédentes, caractérisée en ce qu'elle est orientée biaxialement.

7. Procédé pour envelopper des aliments avec une feuille, caractérisé en ce qu'au moins une feuille selon au moins l'une des revendications précédentes est utilisée.